# DEMANDE DE BREVET EUROPEEN

(11) **EP 4 682 026 A1**
(43) Date de publication de la demande: **21.01.2026**
(21) Numéro de dépôt: 25186132.4
(22) Date de dépôt: 30.06.2025
(51) Int. Cl.: B62D 21/09, B62D 27/06, B62D 29/00, B62D 63/04

(54) **AGENCEMENT POUR VÉHICULE COMPRENANT UN LONGERON, UNE TRAVERSE, UN PREMIER SUPPORT FIXÉ AU LONGERON ET UN DEUXIÈME SUPPORT IDENTIQUE FIXÉ À LA TRAVERSE**

(30) Priorité: 18.07.2024 FR 2407900
(71) Demandeur: Renault s.a.s, 92100 Boulogne Billancourt (FR)
(72) Inventeur: JEANNIN, Christophe, 78640 VILLIERS-SAINT-FREDERIC (FR); PETIT, Frederic, 78640 VILLIERS-SAINT-FREDERIC (FR); RAMOS, Christophe, 78640 VILLIERS-SAINT-FREDERIC (FR)

(57) **Abrégé**

L'invention concerne un agencement (2) pour un véhicule comprenant un longeron avant, un premier support et un deuxième support (10) identiques, le premier support étant destiné à assurer la fixation d'une première unité de commande électronique pour un premier capteur de NOx, le premier support étant fixé au longeron avant, une traverse (4) agencée à l'arrière d'un tel véhicule, le deuxième support (10) étant destiné à assurer la fixation d'une deuxième unité de commande électronique (40) pour un deuxième capteur de NOx, le deuxième support (10) étant fixé à la traverse (4).

## Description

L'invention porte sur un agencement pour véhicule comprenant un longeron avant, une traverse arrière, un premier support fixé au longeron et un deuxième support, identique au premier support, fixé à la traverse, chaque support étant destiné à la fixation d'une unité de commande électronique pour un capteur d'oxydes d'azote. L'invention porte encore sur un châssis comprenant un tel agencement. L'invention porte encore sur un véhicule comprenant un tel châssis ou un tel agencement.

Un véhicule, en particulier un véhicule automobile, comprend généralement un moteur thermique. Un tel moteur thermique en fonctionnement émet des oxydes d'azote communément appelés NOx. Généralement on mesure une telle émission de NOx au niveau d'un tel moteur thermique et/ou au niveau d'une ligne d'échappement d'un tel moteur thermique. De telles mesures, généralement effectuées par un capteur, sont interprétées dans une unité de commande électronique afin de modifier des paramètres d'un tel moteur en fonction des résultats de telles mesures, en particulier afin de réduire de telles émissions de NOx. Une telle unité de commande électronique est généralement agencée à proximité d'une telle ligne d'échappement.

Seulement, une telle ligne d'échappement est agencée en bas d'un châssis d'un tel véhicule si bien qu'une telle unité de commande est également agencée en sous caisse. Or une unité de commande électronique n'est pas totalement étanche ce qui demeure gênant en cas de passage dans une flaque d'eau profonde, et/ou d'inondations recouvrant largement la chaussée, et/ou de passages à gué.

L'objectif de la présente invention est de remédier aux inconvénients ci-dessus. En outre, l'invention permet d'utiliser un premier support pour la fixation d'une première unité de commande électronique reliée à un premier capteur et un deuxième support, identique au premier support, pour la fixation d'une deuxième unité de commande électronique reliée à un deuxième capteur.

### Résumé de l'invention

Pour atteindre cet objectif, l'invention porte sur un agencement pour véhicule, notamment pour véhicule automobile, comprenant :
- un longeron avant, notamment un longeron avant agencé à droite,
- un premier support et un deuxième support identiques,
- le premier support étant destiné à assurer la fixation d'une première unité de commande électronique pour un premier capteur de NOx, le premier support étant fixé au longeron avant,
- une traverse agencée à l'arrière d'un tel véhicule,
- le deuxième support étant destiné à assurer la fixation d'une deuxième unité de commande électronique pour un deuxième capteur de NOx, le deuxième support étant fixé à la traverse.

Le deuxième support peut être fixé sur le dessus de la traverse.

Les premier et deuxième supports peuvent comprendre chacun une face de réception pour une unité de commande électronique respective, la face de réception du premier support et/ou la face de réception du deuxième support pouvant s'étendre verticalement.

La face de réception peut comprendre au moins un trou et/ou au moins une tige filetée pouvant s'étendre perpendiculairement à la face de réception, l'au moins un trou et/ou l'au moins une tige filetée pouvant être apte(s) à participer au positionnement et/ou au maintien en position d'au moins un premier modèle ou un deuxième modèle d'unité de commande électronique.

Le premier support et le deuxième support peuvent comprendre chacun un moyen de maintien pouvant s'étendre depuis une face secondaire opposée à la face de réception, le moyen de maintien pouvant être destiné à participer au maintien d'un câblage de moteur.

Le premier support et le deuxième support peuvent comprendre chacun au moins une extension, notamment deux extensions, pouvant s'étendre perpendiculairement du côté de la face de réception et par rapport à la face de réception, l'au moins une extension pouvant être destinée à participer au maintien d'un câble entrant ou sortant d'une unité de commande électronique.

Le longeron avant peut comprendre deux tiges filetées pouvant s'étendre verticalement et le support peut comprendre deux trous destinés à être traversés par les deux tiges filetées pour assurer la fixation du premier support par rapport au longeron avant.

Le premier support peut comprendre un moyen de fixation, notamment une tige filetée, destiné à coopérer avec une tresse de masse reliée à un moteur électrique additionnel.

Le premier support et le deuxième support peuvent être conformés de sorte à protéger une unité de commande électronique, notamment en comprenant sensiblement une forme globale de boîte parallélépipédique ouverte.

Le premier support et le deuxième support peuvent être obtenus en tôle pliée et/ou emboutie, notamment en tôle d'acier ou d'alliage d'aluminium.

L'invention porte encore sur un châssis de véhicule, notamment de véhicule automobile, comprenant un agencement tel que défini précédemment.

L'invention porte encore sur un véhicule, notamment un véhicule automobile, comprenant un châssis tel que défini précédemment, ou un agencement tel que défini précédemment.

### Présentation des figures

Ces objets, caractéristiques et avantages de la présente invention seront exposés en détail dans la description suivante du mode de réalisation faite à titre non-limitatif en relation avec les figures jointes parmi lesquelles :
La figure 1 est une vue schématique d'un véhicule selon un mode de réalisation de l'invention.
La figure 2 est une vue partielle arrière d'un agencement selon un mode de réalisation de l'invention.
La figure 3 est une vue partielle arrière, en perspective, d'un agencement selon une variante du mode de réalisation de l'invention.
La figure 4 est une vue partielle avant en perspective d'un agencement selon le mode de réalisation de l'invention.
La figure 5 est une vue partielle arrière en perspective de l'agencement selon le mode de réalisation de l'invention.
La figure 6 est une vue en perspective d'un des deux supports de l'agencement selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

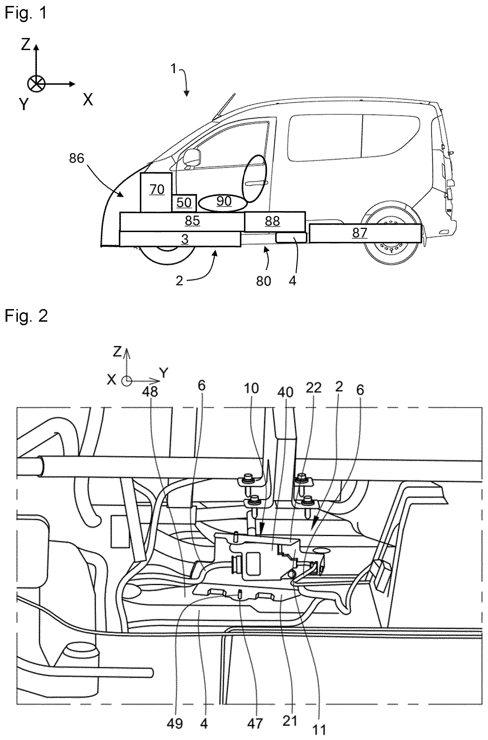

Comme illustré sur la figure 1, un véhicule, de préférence un véhicule automobile 1, comprend un châssis ou caisse 80. Le véhicule 1 comprend un groupe motopropulseur 86 comprenant au moins un moteur thermique ou moteur à combustion interne 85.

Le moteur thermique 85 est par exemple agencé transversalement. Dans ce cas, le véhicule 1 est entraîné de préférence en traction, c'est-à-dire que ce sont les roues avant qui sont motrices. Le groupe motopropulseur 86 comprend alors par exemple une boîte de vitesses 88 mécanique ou automatique.

Alternativement, le moteur thermique 85 est agencé longitudinalement. De préférence, le groupe motopropulseur 86 comprend une boîte de vitesses 88 mécanique. Dans ce cas, de préférence, le véhicule 1 est entraîné en propulsion, c'est-à-dire que ce sont les roues arrière qui sont motrices.

Eventuellement, un moteur électrique 70, dit additionnel, est prévu en supplément du moteur thermique 85. Dans ce cas, le véhicule 1 est hybride et comprend de préférence une batterie 87 de stockage d'énergie électrique.

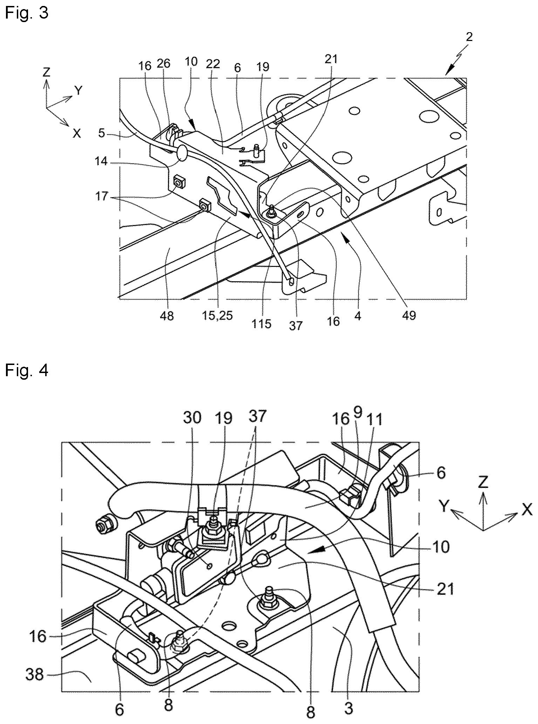

Le véhicule 1, ou le châssis 80, comprend un agencement 2. L'agencement 2 comprend au moins un longeron avant 3. Comme illustré sur les figures 2 et 3, l'agencement 2 comprend encore au moins une traverse 4. Avantageusement, la traverse 4 est agencée à l'arrière du véhicule, tout du moins au niveau ou derrière un rang avant 90 de siège(s) comprenant par exemple un siège conducteur (voir figure 1).

Comme illustré sur la figure 4, le longeron avant 3 est de préférence agencé à droite. L'agencement 2 comprend encore un premier support 10 et un deuxième support 10.

Les premier et deuxième supports 10 sont identiques. Ainsi, les termes « premier support » et « deuxième support » ne servent qu'à les différencier. Dans la description qui va suivre, le premier support est agencé à l'avant ou sensiblement à l'avant du véhicule et le deuxième support est agencé à l'arrière ou sensiblement à l'arrière du véhicule.

Le véhicule 1, ou l'agencement 2, comprend une première unité de commande électronique ou calculateur 30 et un premier capteur 50 de NOx (illustré schématiquement sur la figure 1). Le premier support 10 est destiné à assurer la fixation de la première unité de commande électronique 30 pour le premier capteur 50 de NOx. Le premier support 10 est fixé au longeron avant 3. La première unité de commande électronique 30 est reliée via un câble, câblage ou un ou plusieurs fil(s) 6 au premier capteur 50. Le premier capteur 50 est apte à mesurer un taux ou valeur d'oxydes d'azote au niveau du moteur à combustion interne 85, par exemple au niveau d'une culasse, tout du moins au début d'une ligne d'échappement 7.

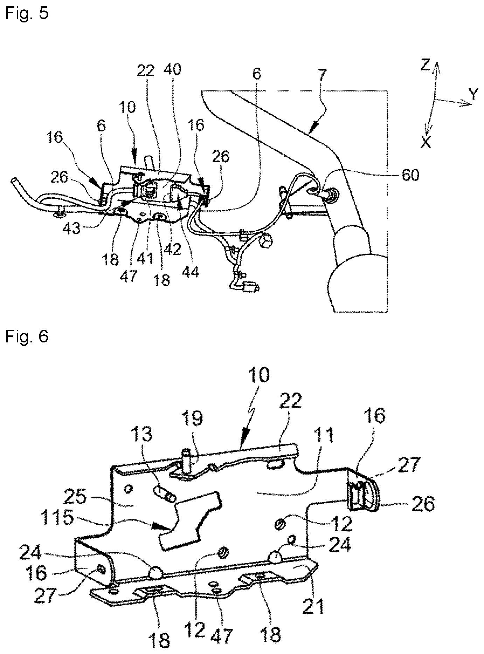

Le véhicule 1, ou l'agencement 2, comprend une deuxième unité de commande électronique 40 et un deuxième capteur 60 de NOx illustrés sur la figure 5. Le deuxième support 10 est destiné à assurer la fixation de la deuxième unité de commande électronique 40 pour le deuxième capteur 60 de NOx. Le deuxième capteur 60 est apte à mesurer un taux ou valeur d'oxydes d'azote NOx au niveau de la ligne d'échappement 7 du moteur à combustion interne 85. Le deuxième support 10 est fixé à la traverse 4.

La deuxième unité de commande électronique 40 est reliée via un câble, câblage ou un ou plusieurs fil(s) 6 au deuxième capteur 60.

De préférence, comme illustré sur la figure 4, le premier support 10 est fixé sur le dessus du longeron 3. Pour ce faire, de préférence, le longeron avant 3 comprend deux tiges filetées 8 s'étendant verticalement depuis une face supérieure 38. La face supérieure 38 du longeron 3 s'étend de préférence dans un plan transversal et longitudinal. Pour assurer la fixation du premier support vis-à-vis du longeron doté des deux tigres filetées 8, le support 10 comprend deux trous 18 illustrés notamment sur la figure 6. Ainsi, chaque trou 18 du premier support est traversé par une tige filetée 8 du longeron 3 pour assurer le pré-maintien du premier support 10 sur le longeron 3. Des écrous 37 coopérant avec les tiges filetées 8 assurent le maintien en position du premier support 10 par rapport au longeron 3. Le support 10 est alors pris en sandwich entre la face supérieure 38 du longeron 3 et le dessous des écrous 37 coopérant avec les tiges filetées 8.

Dans le mode de réalisation de l'agencement 2 illustré sur la figure 2, le deuxième support 10 est fixé sur le dessus de la traverse 4. Pour ce faire, de préférence, la traverse 4 comprend une tige filetée 49 s'étendant verticalement depuis une face supérieure 48 de la traverse. La face supérieure 48 de la traverse 4 s'étend de préférence dans un plan transversal et longitudinal. Pour assurer la fixation du deuxième support vis-à-vis de la traverse dotée de la tige filetée 49, le support 10 comprend un trou 47 illustré notamment sur les figures 5 et 6. Ainsi, le trou 47 du support est traversé par la tige filetée 49 de la traverse 4 pour assurer le pré-maintien du deuxième support 10 sur la traverse 4, comme illustré sur la figure 2. Un écrou coopérant avec la tige filetée 49 assure le maintien en position du deuxième support 10 par rapport à la traverse 4. Le support 10 est alors pris en sandwich entre la face supérieure 48 de la traverse 4 et le dessous de l'écrou (non illustré) coopérant avec la tige filetée 49. Dans ce mode de réalisation, le support 10 s'étend sensiblement verticalement, la plus grande dimension du support 10 s'étendant transversalement ou sensiblement transversalement.

Dans une variante du mode de réalisation de l'agencement 2 illustré sur la figure 3, le deuxième support 10 est également fixé sur le dessus de la traverse 4. Pour ce faire, de préférence, la traverse 4 comprend une tige filetée 49 s'étendant verticalement depuis une face supérieure 48 de la traverse 4. La face supérieure 48 de la traverse 4 s'étend de préférence dans un plan transversal et longitudinal. Pour assurer la fixation du deuxième support vis-à-vis de la traverse dotée de la tige filetée 49, on utilise au moins un des trous 18 du support 10 illustré notamment sur la figure 6. Ainsi, le trou 18 du support est traversé par la tige filetée 49 de la traverse 4 pour assurer le pré-maintien du deuxième support 10 sur la traverse 4. Un écrou 37 coopérant avec la tige filetée 49 assure le maintien en position du deuxième support 10 par rapport à la traverse 4. Le support 10 est alors pris en sandwich entre la face supérieure 48 de la traverse 4 et le dessous de l'écrou 37 coopérant avec la tige filetée 49. Eventuellement, une seconde tige filetée 49 s'étend depuis la traverse 4 et coopère avec le second trou 18 du support et un écrou 37 complète la fixation du deuxième support 10 sur la traverse 4. Dans cette variante du mode de réalisation, le support 10 s'étend sensiblement verticalement, la plus grande dimension du support 10 s'étendant longitudinalement ou sensiblement longitudinalement.

Plus précisément, comme illustré en particulier sur la figure 6, un support 10 comprend une face de réception 11 pour une unité de commande électronique. Par face de réception 11, on entend une face du support 10 destinée à venir en vis-à-vis de l'unité de contrôle électronique que le support reçoit. Par exemple, cette face de réception 11 est plane ou sensiblement plane. Par exemple, la face de réception 11 est percée, trouée, ouverte, découpée c'est-à-dire qu'elle comprend un orifice 115. Une telle découpe 115, de préférence traversante, dans la face de réception 11 permet par exemple de contribuer, de favoriser, de participer à la mise en position et/ou au maintien en position de l'unité de commande électronique vis-à-vis de son support. Avantageusement, le deuxième support 10, fixé sur la traverse 4, a sa face de réception 11 s'étendant verticalement ou sensiblement verticalement, comme illustré sur les figures 2 et 3.

De préférence, la face de réception 11 du premier support 10 s'étend verticalement et longitudinalement sur le longeron 3, comme illustré sur la figure 4.

Pour rappel, le premier et le deuxième supports sont intégralement identiques. Autrement dit, à l'état démonté, on ne peut pas distinguer le premier support du deuxième support.

Chaque support est par exemple conformé de sorte à protéger l'unité de commande électronique qu'il permet de fixer, recevoir, loger. De préférence, comme illustré en particulier sur les figures 2, 4, et 5, le support a sensiblement une forme globale de boîte parallélépipédique ouverte. Ainsi, de préférence, un support 10 comprend au moins une extension 16. Avantageusement, le support 10 comprend deux extensions 16 s'étendant parallèlement l'une par rapport à l'autre comme illustré sur la figure 6. Par exemple, les deux extensions 16 s'étendent perpendiculairement par rapport à la face de réception 11. En outre, les deux extensions 16 s'étendent du côté de la face de réception 11. Au moins une extension 16, de préférence les deux extensions 16 comprennent chacune un moyen de fixation 27 pour un crochet 26. Le crochet 26 maintient, supporte, retient le câble 6 entrant ou sortant de l'unité de commande électronique fixée au support. Par exemple, le moyen de fixation 27 est un trou et le crochet 26 vient se clipper, se clipser, se coincer dans le trou 27. De préférence, le support 10 comprend encore une paroi inférieure 21. Comme illustré sur les figures 2 et 4, la paroi inférieure 21 s'étend dans un plan transversal et longitudinal, ou sensiblement transversal et longitudinal. Comme illustré sur la figure 6, la paroi inférieure 21 s'étend perpendiculairement depuis la face de réception 11 et du même côté que la face de réception. De préférence, le support 10 comprend encore une paroi supérieure 22. La paroi supérieure 22 s'étend dans un plan transversal et longitudinal, ou sensiblement transversal et longitudinal. Comme illustré sur la figure 6, la paroi supérieure 22 s'étend perpendiculairement depuis la face de réception 11 et du même côté que la face de réception. Ainsi, de préférence, les parois supérieure et inférieure 21, 22 sont parallèle l'une par rapport à l'autre, en vis-à-vis. Les extensions ou parois 16 sont parallèles l'une par rapport à l'autre de sorte que ces quatre parois (deux parois 16, la paroi inférieure 21 et la paroi supérieure 22) ou portions du support forment, avec une cinquième paroi 25, une forme globale de parallélépipède dont il manque une paroi. La paroi 25 comprend d'un côté la face de réception 11 et de l'autre côté la face secondaire 15. Ainsi, cette sorte de parallélépipède ouvert permet de loger l'unité de commande électronique via la paroi manquante ou ouverture, alors que les cinq parois ou portions de paroi protègent l'unité de commande.

De préférence, le support 10 est obtenu en tôle pliée et/ou emboutie. Par exemple, la tôle est en acier ou en alliage d'aluminium. Par exemple, l'épaisseur de la tôle, et/ou de chaque paroi, est comprise entre 0.5 mm et 2 mm. Eventuellement, un ou des bords tombés, et/ou un ou des emboutis, et/ou une ou des nervures 24 sont prévu(e)s de sorte à rigidifier le support sans ajout de matière, et par conséquent à masse constante et optimisée.

Comme illustré en particulier sur la figure 6, la face de réception 11, c'est-à-dire la cinquième paroi 25, comprend au moins un trou 12. Alternativement, ou en complément, la cinquième paroi 25 comprend au moins une tige filetée 13 s'étendant perpendiculairement depuis la face de réception 11. Ainsi, le ou les trous 12, par exemple au nombre de deux comme illustré, et/ou au moins une tige filetée 13 participent au positionnement et/ou au maintien en position d'au moins un premier modèle, ou d'au moins un deuxième modèle d'unité de commande électronique. Le premier modèle d'unité de commande électronique est ici différent du deuxième modèle d'unité de commande électronique, en particulier en termes de points de fixation et/ou en termes de formes, et/ou en termes de masse. Eventuellement, le support peut positionner et maintenir au-delà de deux type ou modèles d'unité de commande électronique. Autrement dit, le support muni de ses trous 12, avantageusement filetés ou comprenant des écrous rapportés 17 derrière par exemple (voir figure 3), et/ou muni d'au moins une tige filetée 13, est apte à supporter divers types ou modèles d'unité de commande électronique. De tels modèles d'unités de commande électronique ont éventuellement des similarités de formes et/ou comportent des différences de formes. Quoi qu'il en soit le support est compatible pour supporter les différentes unités de commande électronique.

Avantageusement, sur un véhicule donné, l'unité de commande électronique fixée sur le support, lui-même fixé sur le longeron avant, est la même unité de commande électronique que celle fixée sur le support, lui-même fixé sur la traverse arrière.

Eventuellement, étant donnée la capacité de fixation de plusieurs types d'unités de commande électronique sur le support, l'unité de commande électronique agencée à l'avant d'un véhicule peut être différente de celle agencée à l'arrière de ce même véhicule.

Comme illustré sur la figure 3, le support 10 comprend un moyen de maintien 14 s'étendant depuis la face secondaire 15 de la cinquième paroi 25. Autrement dit, la face opposée à la face de réception 11 comprend un moyen de maintien 14. De préférence, le moyen de maintien 14 est un crochet ou équivalent qui permet de participer au maintien d'un câblage 5 pour le moteur à combustion interne 85 et/ou pour un moteur électrique 70. Alternativement, le moyen de maintien 14 permet de maintenir un autre élément qu'un câblage ou équivalent. Par exemple, la cinquième paroi 25 comprend un trou dans lequel le moyen de maintien 14 est clippé, clipsé, inséré.

De préférence, le support 10 comprend encore un moyen de fixation 19. Par exemple, comme illustré sur les figures 4 et 6, le moyen de fixation 19 est une tige filetée s'étendant depuis la paroi supérieure 22, de préférence perpendiculairement depuis cette paroi 22 vers le haut. Le moyen de fixation 19 permet alors de coopérer directement, ou par l'intermédiaire d'un élément de type collier par exemple, avec une tresse de masse 9 reliée au moteur électrique 70. Avantageusement, la tresse de masse 9 est isolée électriquement et/ou l'élément de type collier est isolé électriquement de sorte à ne pas transmettre une éventuelle décharge électrique au niveau de l'unité de commande électronique 30 supportée au sein du support 10.

En résumé, la solution porte sur deux supports identiques pour la fixation de deux unités de commande électronique ou calculateurs reliés chacun à une sonde de mesure d'oxydes d'azote NOx émanant d'un moteur à combustion interne. De préférence, la première sonde 50 est agencée à proximité immédiate du moteur 85, par exemple au niveau d'une culasse ou à proximité d'une culasse du moteur, alors que la deuxième sonde 60 est agencée sur la tubulure ou ligne d'échappement 7. Chaque sonde 50, 60 mesure les oxydes d'azote présents dans les gaz d'échappement émanant du moteur thermique 85. La première sonde 50 prend des mesures de NOx à la sortie du moteur 85 et une transmission des données se fait jusqu'au premier calculateur 30 via par exemple un des câbles 6 (figure 4). La deuxième sonde 60 prend des mesures de NOx dans la ligne d'échappement 7 et une transmission des données se fait jusqu'au calculateur 40 via un des câbles 6. Comme évoqué précédemment, un des câbles 6 ou fil ou tresse relie une sonde 50, 60 à son calculateur respectif 30, 40 de sorte à transmettre les informations du capteur 50, 60 au calculateur correspondant. Par exemple un autre câble ou fil ou tresse électrique 6, comprenant notamment une alimentation électrique, s'étend depuis le calculateur vers une source de courant électrique le cas échéant. Comme illustré sur la figure 5, le câble 6 côté droit est maintenu par rapport au support 10 via un crochet 26 rapporté de préférence sur une extension ou oreille 16 du support 10. Le câble 6 côté gauche est maintenu par rapport au support 10 via un autre crochet 26 rapporté de préférence sur l'autre extension ou oreille 16 du support 10. Autrement dit, le support 10 de calculateur pour oxydes d'azote permet de fixer la dérive de câblage d'alimentation du calculateur de préférence.

Avantageusement, chaque support est disposé, agencé, aussi bien à l'avant qu'à l'arrière de sorte que chaque calculateur se trouve sensiblement verticalement, c'est-à-dire en position verticale. Par exemple, comme illustré sur la figure 5, un calculateur a globalement une forme parallélépipédique et comprend une interface de connexion 43 au niveau d'une première face 41 (illustrée schématiquement en pointillés) et une autre interface de connexion 44 au niveau d'une deuxième face 42 (illustrée schématiquement en pointillés) opposée à la première face 41 du parallélépipède. Chaque interface de connexion 43, 44 est destinée à coopérer avec une cosse ou prise ou fiche reliée à chaque fil 6. Ainsi, le support s'étend de sorte que les première et deuxième faces 41, 42 d'un calculateur s'étendent verticalement ou sensiblement verticalement.

Autrement dit, par l'intermédiaire de ce support, le calculateur NOx a sa sonde en position verticale.

En outre, ce support comprend de préférence d'autres fonctions. Comme illustré sur les figures 3, 4 et 6 notamment, le moyen de fixation 19 (tige filetée s'étendant depuis la paroi supérieure 22 du support) crée un point fixe, une fixation, pour la tresse de masse 9 en cas de moteur électrique 70 équipant le véhicule 1. Il est à noter qu'une surlongueur de tresse de masse 9 est prévue entre le moteur électrique et le moyen de fixation 19 car le moteur électrique est mobile par rapport à la caisse. En effet, des moyens d'amortissement entre la caisse et le moteur électrique sont prévus. Or, le moyen 19 est quant à lui fixe par rapport à la caisse puisque le support 10 est directement monté sur le longeron 3.

De plus, comme illustré sur la figure 3, le support 10 peut encore la fonction d'assurer la fixation du câblage 5 de moteur. Pour cela, comme évoqué précédemment, le moyen de maintien 14 est prévu. Il est à noter que le câblage moteur passe alors contre, ou sensiblement contre, la face secondaire 15 de la cinquième paroi 25 du support.

A noter que chacune de ces fonctions peut être prévue pour le support agencé à l'avant et/ou pour le support agencé à l'arrière.

Par exemple, selon le mode de réalisation du véhicule 1 illustré partiellement sur la figure 2, la traverse 4 supporte au moins partiellement la boîte de vitesses 88 (non illustrée sur cette figure). Dans ce cas, le calculateur est fixé sur la traverse supportant la boîte de vitesses, en zone sous caisse. De préférence, le moteur thermique 85 est alors agencé longitudinalement. Ainsi, le support 10 est monté sur une traverse 4 très rigide, de préférence via au moins la tige filetée 49 (par exemple soudée sur la traverse 4), et coopérant dans le trou 47 du support 10. De préférence, dans ce cas, le support 10 s'étend sensiblement transversalement, c'est-à-dire sensiblement parallèlement à la traverse 4. Il en résulte que l'unité de commande électronique ou calculateur 40 s'étend également principalement selon cette direction. Une première interface de connexion au calculateur est alors agencée à gauche et une deuxième interface de connexion au calculateur est alors agencée à droite. L'ouverture (absence d'une des six parois) du support assimilable à une boîte globalement parallélépipédique est ici orientée vers l'arrière. Cette ouverture permet le montage, l'assemblage du calculateur sur le support. Alternativement, le support pourrait être orienté différemment, par exemple avec l'ouverture vers l'avant.

Par exemple, sur la figure 3, selon la variante de réalisation du véhicule 1, la traverse 4 ne supporte pas la boîte de vitesses 88, le moteur 85 étant agencé transversalement dans le compartiment moteur à l'avant (non illustré sur cette figure). Ainsi, le support 10 est monté sur la traverse 4, de préférence via au moins la tige filetée 49 (par exemple soudée sur la traverse 4), et coopérant dans au moins un trou 18 du support 10. De préférence, dans ce cas, le support 10 s'étend sensiblement longitudinalement, c'est-à-dire sensiblement perpendiculairement à la traverse 4. Il en résulte que l'unité de commande électronique ou calculateur 40 s'étend sensiblement longitudinalement. Une première interface de connexion au calculateur est alors agencée sensiblement à l'avant de la traverse et une deuxième interface de connexion au calculateur est alors agencée sensiblement à l'arrière de la traverse, en particulier si le support est sensiblement centré au-dessus de la traverse selon la direction avant-arrière. En effet, comme illustré, le support 10 a sensiblement une forme de boîte parallélépipédique de volume intérieur supérieur au volume occupé par un calculateur, de préférence supérieur au volume occupé par un calculateur équipé d'au moins deux connexions. Ainsi, le support peut jouer un rôle de protection pour le calculateur. Pour rappel, le support est de préférence métallique. Par exemple le calculateur comprend une coque en plastique qui est donc davantage fragile. En outre, les extensions 16 favorisent cette protection tout en assurant un maintien optimal du ou des câbles 6 comme évoqué précédemment. L'ouverture (absence d'une des six parois) du support est alors orientée vers la droite, en particulier en cas de ligne d'échappement 7 s'étend du côté droit du véhicule de sorte à favoriser le montage et les branchements, et/ou le démontage ultérieur le cas échéant. Alternativement, l'ouverture du support pourrait être orientée vers la gauche.

Comme illustré sur la figure 4, le premier calculateur 30 relié à la première sonde 50 d'oxydes d'azote est fixé dans le compartiment moteur du véhicule 1, sur le longeron avant, de préférence le longeron avant côté droit.

La solution permet d'implanter un calculateur qui n'est pas intégralement étanche. En effet, le positionnement vertical du support engendre un positionnement vertical du calculateur de sorte à agencer les deux connexions ou interfaces 41, 42 le plus haut possible. Ainsi, en cas de passage du véhicule 1 dans une flaque d'eau profonde, et/ou de fortes pluies, et/ou d'inondations, ou encore de passage à gué, le calculateur est au-dessus de la traverse arrière 4, c'est-à-dire à une hauteur conséquente. Cette hauteur permet d'éviter que le calculateur soit immergé lors de telles conditions. Autrement dit, l'agencement 2 évite que l'un des calculateurs ne se retrouve dans l'eau. A l'avant, au-dessus du longeron de préférence, le calculateur est davantage en hauteur et est d'autant moins soumis au risque d'immersion.

Bien que cela ne soit pas illustré, la forme du support pourrait être différente, par exemple avec un angle entre la paroi inférieure 21 et la cinquième paroi 25 différent de 90 degrés. Par exemple cet angle pourrait être compris entre 120 et 90 degrés, voire entre 150 degrés et 120 degrés. Alternativement, l'angle entre la paroi inférieure 21 et la cinquième paroi 25 pourrait être inférieur à 90 degrés. Pour rappel, le calculateur est de préférence fixé contre la cinquième paroi, du côté de l'ouverture du support, c'est-à-dire contre la face de réception 11.

Il est à noter que les différents moyens de fixation du support pour recevoir un calculateur, à savoir des trous 12, de préférence débouchant dans des écrous rapportés 17, un trou 115, par exemple de forme spécifique (ni circulaire, ni carré, ni oblong, ni ovale), au moins une tige filetée 13 s'étendant depuis la face de réception 11, permettent le positionnement et/ou la fixation de différents modèles de calculateur. Ainsi, en cas de véhicule équipé d'un modèle de calculateur adapté à un type de sonde par exemple, par exemple un véhicule satisfaisant la norme européenne environnementale Euro VI, et un véhicule équipé d'un autre modèle de calculateur adapté à un autre type de sonde, par exemple un véhicule satisfaisant une norme européenne environnementale Euro VII, le même support peut être utilisé. Il en résulte des économies en termes de fabrication (économie d'échelle), de logistique (une seule référence puisqu'il n'y a qu'un seul type de support), une facilité de stockage de ces supports et enfin on évite un risque d'erreur au montage des supports sur le châssis du fait de l'unique référence. En outre, on réduit le temps de montage eu égard à cette unique référence.

Comme évoqué, deux supports identiques, standards, sont montés sur chaque véhicule, l'un étant à l'avant et l'autre à l'arrière. Alternativement, un seul support, ou trois supports, voire davantage de supports, sont agencés sur un même véhicule. Etant donné la compatibilité du support vis-à-vis de différents modèles de calculateurs ou unités de commande électronique, le support peut être utilisé sur de nombreux modèles de véhicules distincts.

Ainsi, malgré l'implantation en soubassement arrière du deuxième calculateur, celui-ci n'est pas immergé en cas de passage à gué par exemple. Le calculateur peut donc être à proximité de la ligne d'échappement 7 sans risque d'immersion en cas de passage du véhicule dans de l'eau, de la boue, ou autre.

En remarque, la solution atteint donc l'objectif recherché de loger des calculateurs de manière à éviter leur immersion, malgré leur implantation en sous-caisse, et présente l'avantage d'offrir une grande compatibilité pour la fixation de différents modèles calculateurs et peut par conséquent être adaptée à d'autres véhicules terrestres tels que bus, cars, ou poids lourds par exemple.

## Revendications

1. Agencement (2) pour véhicule, notamment pour véhicule automobile (1), comprenant :
- un longeron avant (3), notamment un longeron avant (3) agencé à droite,
- un premier support (10) et un deuxième support (10) identiques,
- le premier support (10) étant destiné à assurer la fixation d'une première unité de commande électronique (30) pour un premier capteur (50) de NOx, le premier support (10) étant fixé au longeron avant (3),
- une traverse (4) agencée à l'arrière d'un tel véhicule,
- le deuxième support (10) étant destiné à assurer la fixation d'une deuxième unité de commande électronique (40) pour un deuxième capteur (60) de NOx, le deuxième support (10) étant fixé à la traverse (4).

2. Agencement (2) selon la revendication précédente, **caractérisé en ce que** le deuxième support (10) est fixé sur le dessus de la traverse (4).

3. Agencement (2) selon l'une des revendications précédentes, **caractérisé en ce que** les premier et deuxième supports (10) comprennent chacun une face de réception (11) pour une unité de commande électronique (30, 40) respective, la face de réception (11) du premier support (10) et/ou la face de réception (11) du deuxième support (10) s'étendant verticalement.

4. Agencement (2) selon la revendication précédente, **caractérisé en ce que** la face de réception (11) comprend au moins un trou (12) et/ou au moins une tige filetée (13) s'étendant perpendiculairement à la face de réception (11), l'au moins un trou (12) et/ou l'au moins une tige filetée (13) étant apte(s) à participer au positionnement et/ou au maintien en position d'au moins un premier modèle ou un deuxième modèle d'unité de commande électronique.

5. Agencement (2) selon l'une des revendications 3 ou 4, **caractérisé en ce que** le premier support (10) et le deuxième support (10) comprennent chacun un moyen de maintien (14) s'étendant depuis une face secondaire (15) opposée à la face de réception (11), le moyen de maintien (14) étant destiné à participer au maintien d'un câblage (5) de moteur.

6. Agencement (2) selon l'une des revendications 3 à 5, **caractérisé en ce que** le premier support (10) et le deuxième support (10) comprennent chacun au moins une extension (16), notamment deux extensions (16), s'étendant perpendiculairement du côté de la face de réception (11) et par rapport à la face de réception (11), l'au moins une extension (16) étant destinée à participer au maintien d'un câble (6) entrant ou sortant d'une unité de commande électronique.

7. Agencement (2) selon l'une des revendications précédentes, **caractérisé en ce que** le longeron avant (3) comprend deux tiges filetées (8) s'étendant verticalement et **en ce que** le support (10) comprend deux trous (18) destinés à être traversés par les deux tiges filetées (8) pour assurer la fixation du premier support (10) par rapport au longeron avant (3).

8. Agencement (2) selon l'une des revendications précédentes, **caractérisé en ce que** le premier support (10) comprend un moyen de fixation (19), notamment une tige filetée, destiné à coopérer avec une tresse de masse (9) reliée à un moteur électrique additionnel (70).

9. Agencement (2) selon l'une des revendications précédentes, **caractérisé en ce que** le premier support (10) et le deuxième support (10) sont conformés de sorte à protéger une unité de commande électronique (30 ; 40), notamment en comprenant sensiblement une forme globale de boîte parallélépipédique ouverte.

10. Agencement (2) selon l'une des revendications précédentes, **caractérisé en ce que** le premier support (10) et le deuxième support (10) sont obtenus en tôle pliée et/ou emboutie, notamment en tôle d'acier ou d'alliage d'aluminium.

11. Châssis (80) de véhicule, notamment de véhicule automobile (1), **caractérisé en ce qu'**il comprend un agencement (2) selon l'une des revendications 1 à 10.

12. Véhicule, notamment véhicule automobile (1), comprenant un châssis (80) selon la revendication précédente, ou un agencement (2) selon l'une des revendications 1 à 10.
